# EUROPEAN PATENT APPLICATION

(11) **EP 4 575 693 A1**
(43) Date of publication of application: **25.06.2025**
(21) Application number: 24164029.1
(22) Date of filing: 18.03.2024
(51) Int. Cl.: G05D 1/229, G05D 1/248, G05D 1/648, A01D 34/00

(54) **ROBOTIC LAWNMOWER SYSTEM**

(30) Priority: 21.12.2023 SE 2351480
(71) Applicant: Husqvarna AB, 561 82 Huskvarna (SE)
(72) Inventor: Nilsson, Adam, Huskvarna (SE); Hellsin, Beppe, Huskvarna (SE); Svensson, Tommy, Huskvarna (SE)

(57) **Abstract**

The present disclosure relates to a method for defining a boundary of a work area (30) in a robotic lawnmower system, the system comprising a robotic lawnmower (1), configured to process the work area (30) and to determine its position (xr, yr, zr) in the work area, and a separate, mobile device (11) configured to determine its position (xm, ym, zm) in the work area (30) and having a camera (13) configured to capture images of the work area (30) and a display (15) which provides a user interface, enabling a user to define boundary segments (33, 37) of the work area boundary (31, 39) therein as a set of positions which are transferred to the robotic lawnmower (1). The separate, mobile device (11) receives satellite positioning data from a plurality of satellites and correction positioning data from a reference station (31), thereby increasing the precision of its position detection.

## Description

### Technical field

The present disclosure relates to a method for defining a boundary of a work area in a robotic lawnmower system. The system comprises a robotic lawnmower, configured to process the work area and to determine its position in the work area, and a separate, mobile device. The mobile device is configured to determine its position in the work area and has a camera configured to capture images of the work area and a display which provides a user interface, enabling a user to define boundary segments of the work area boundary therein as a set of positions which are transferred to the robotic lawnmower.

### Background

A robotic lawnmower system of this kind is disclosed in EP-3767420-A1 where a work area is filmed using a mobile device, and borders in the work area are defined by sequentially placing virtual markers in a user interface illustrating images of the work area. In order to sense the mobile device's position in a global coordinate system, the charging station of the lawnmower and one other position with known coordinates are registered. The intention is to provide a navigation function in the robotic lawnmower that makes installing a boundary cable unnecessary.

In practice, the positions recorded with the mobile device may drift increasingly in relation to the global coordinate system in between the known positions, mobile device positioning usually relying on GPS, accelerometers and visual odometry. This implies that there may be differences between the positions sensed by the mobile device and actual position in the global coordinate system in which the robotic lawnmower navigates.

As a consequence, the positions in which the user believes to place the virtual markers may differ from the actual positions in a global coordinate system. If the robotic lawnmower is used based on those positions, this may result in grass being left uncut or in the robotic lawnmower processing areas which should be spared, for instance. The aforementioned document also describes an alternative method where the mobile device is used as a remote control, steering the robotic lawnmower along a path that defines the work area boundaries and recording the corresponding positions.

One problem associated with prior art is therefore how to improve the definition of a work area boundary such that precision is improved.

### Summary

One object of the present disclosure is therefore to provide a robotic lawnmower system with improved precision.

This object is achieved by means of a method in a robotic lawnmower system as defined in claim 1. More specifically, in a method of the initially mentioned kind, the separate, mobile device receives satellite positioning data from a plurality of satellites and correction positioning data from at least one reference station.

In this way, the positioning data of the mobile device is improved, which correspondingly improves the data sent to the robotic lawnmower.

The robotic lawnmower may also receive correction positioning data from a reference station, and typically the separate, mobile device and the robotic lawnmower, may receive correction positioning data from the same reference station.

The reference station may be located within 100 m from the mobile device.

The correction data may be sent over a radio channel, such as an UHF channel, or over a cellular mobile network.

An indication may be given in the user interface when correction positioning data is received.

The position of the mobile device is typically determined based on the satellite positioning data and the correction positioning data.

Alternatively, a method is considered where defining or editing a boundary of a work area in a robotic lawnmower system takes place and the system comprises a robotic lawnmower, configured to process the work area and to determine its position in the work area, and a separate, mobile device being configured to determine its position in the work area and having a camera configured to capture images of the work area and a display which provides a user interface, enabling a user to define boundary segments of the work area boundary therein as a set of positions which are transferred to the robotic lawnmower. The separate, mobile device receives satellite positioning data from a plurality of satellites as well as correction positioning data for enhancing said satellite positioning data.

The correction positioning data may be received via IP communication or L-band radio communication, for instance.

A corresponding robotic lawnmower system is considered comprising a robotic lawnmower, configured to process a work area and to determine its position in the work area, and a separate, mobile device configured to determine its position in the work area and having a camera configured to capture images of the work area and a display which provides a user interface, enabling a user to define boundary segments of the work area boundary therein as a set of positions which are transferred to the robotic lawnmower. The separate, mobile device is configured to receive satellite positioning data from a plurality of satellites and correction positioning data from at least one reference station.

The robotic lawnmower may also be configured to receive correction positioning data from a reference station. Typically, the separate, mobile device and the robotic lawnmower may be configured to receive correction positioning data from the same reference station.

The reference station may be located within 100 m from the mobile device.

The correction data is sent over a radio channel, or over a cellular mobile network.

The mobile device may be configured to present an indication in the user interface when correction positioning data is received.

A corresponding mobile device for a robotic lawnmower system is considered. The mobile device is configured to determine its position in a work area and has a camera configured to capture images of the work area and a display which provides a user interface, enabling a user to define boundary segments of the work area boundary therein as a set of positions which may be transferred to a robotic lawnmower. The mobile device is configured to receive satellite positioning data from a plurality of satellites as well as correction positioning data for enhancing said satellite positioning data.

The present disclosure also considers a corresponding data processing equipment, a computer program product, and a computer-readable storage medium having stored thereon the computer program product.

### Brief description of the drawings

Fig 1 illustrates a robotic lawnmower.
Fig 2 illustrates a mobile device used to provide an AR interface.
Fig 3 illustrates using a mobile device to record segments of a work area.
Fig 4 shows a mobile device connected to a dGPS receiver.
Fig 5 illustrates establishing a work area using a mobile device.
Fig 6 illustrates a robotic lawnmower navigating according to the established work area.

### Detailed description

The present disclosure relates to robotic lawnmower systems. Such systems comprise a robotic lawnmower, or similar device, which is configured to process a work area. Further, a charging station, intermittently charging the lawnmower may be provided, although in the context of the present disclosure the charging station is not necessary.

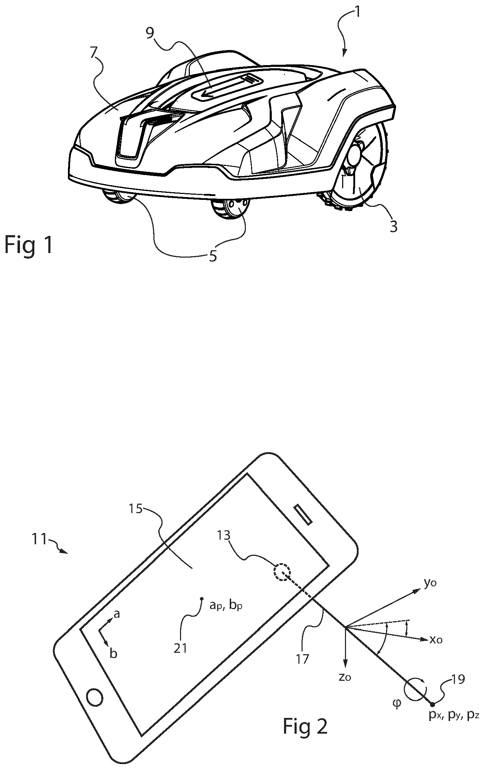

Fig 1 shows an example of a robotic lawnmower 1 comprising rear driving wheels 3, which may be controlled individually, such that they also accomplish steering of the robotic lawnmower, and front caster wheels 5 that may be undriven, although different configurations are conceivable in the context of the present disclosure, such as 4-wheel driving configurations, articulated configurations, etc. The robotic lawnmower may typically have an outer housing 7.

The lawnmower is configured to autonomously process a work area in a structured or more or less random fashion depending on desired settings. The lawnmower is further configured to be or become aware of its position in the work area as well as the layout of the work area.

The position sensing may be accomplished using a satellite navigation system, which may be enhanced using real-time kinematics, RTK, to obtain a precision of down to a few centimeters with regard to the lawnmower's position.

Methods exist to provide the robotic lawnmower with information regarding the work area in which a user wants the robotic lawnmower to operate. For instance, it has been suggested to lead the lawnmower around the outer boundary of the work area once, the lawnmower being remotely controlled, and letting the lawnmower record the positions of the outer boundary using its navigation system. This allows the robotic lawnmower to recognize its work area. This technique, sometimes referred to as "walk-the-dog", is relatively time-consuming and not very flexible. If the user decides to change the boundary to some extent, the process will likely need be repeated, even if the change is small.

Therefore, in this context, the use of so-called augmented reality, AR, functions are considered a promising alternative. Then, a user interface is provided on a separate, mobile device 11 illustrated in fig 2.

The mobile device 11 comprises a built-in camera 13 and a display 15 which is capable of producing images taken by the camera and at the same time accomplish a user interface. The mobile device may typically be a smartphone or a tablet with touch-screen input capability, although other alternatives would be conceivable using other input means.

The mobile device 11 typically has a GPS or other satellite navigation functionality allowing the mobile device to determine its position as will be discussed.

Further, the mobile device may comprise sensors such as accelerometers and/or gyros such as MEMS, micro-electromechanical system, gyroscopes, and other inertia measurement units, IMUs. Those IMUs in the mobile device 11 allows it to determine its orientation, both the orientation of the camera's 13 optical axis 17 in a three-dimensional coordinate system (x, y, z) and the mobile device's 11 roll angle φ in relation to that optical axis 17. The accelerometers may also detect movements without change of orientation.

Thereby, it is possible to provide a mapping between positions 19 (pₓ, p_{y}, p_{z}) in a work area depicted by the camera 13 and a corresponding position 21 (aₚ, bₚ) in the mobile device's 11 display 15. This makes it possible to display for instance a work area boundary in the display, as an addition to the image captured by the camera.

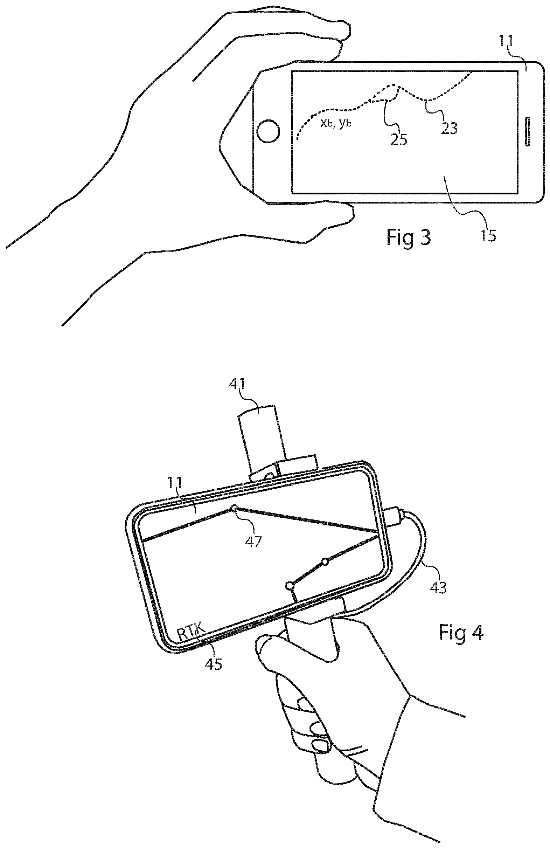

This is illustrated with an example in fig 3, where the user uses a mobile device 11 in the form of a smartphone which provides on its display 15 an image of for instance a garden which is simultaneously captured by the smartphone camera 13. In addition to this image, virtual information such as a work area boundary 23 defined by a sequence of positions xb, yb, which are mapped between the work area and the display. Thus, if the user changes the camera's view, the work area boundary 23 on the display moves correspondingly. In this interface, the user can add a work area boundary 23 as the one illustrated using for instance a touch-screen functionality. It is also possible to edit an already entered boundary 23 by providing an updated section 25, for instance.

The user can thus create position data relating to a work area from scratch by moving around a garden and entering a number of positions in the garden image displayed as a number of waypoints that are joined to form the work area. The work area may include inner and outer boundaries as well as information on preferred routes and areas that should be processed in a particular manner by the robotic lawnmower. For instance, some areas could be defined as areas that should not be cut under wet conditions. Details of the work area entered in a particular part of the garden may be indicated in the user interface when that part of the garden is captured by the camera.

The positions in the display 15 can be translated into positions in the garden or the like, which defines the work area for the robotic lawnmower 1. Those positions can thus be transmitted to the robotic lawnmower 1 which may operate accordingly, typically remaining within an outer boundary, and optionally avoiding certain areas within that outer boundary, treating other areas according to certain schemes, following certain routes, etc.

Global Navigation Satellite Systems, GNSSs, of which GPS is one example, provide a position detection accuracy of a few meters. While this is sufficient in many applications, a robotic lawnmower operating with such low accuracy is not acceptable.

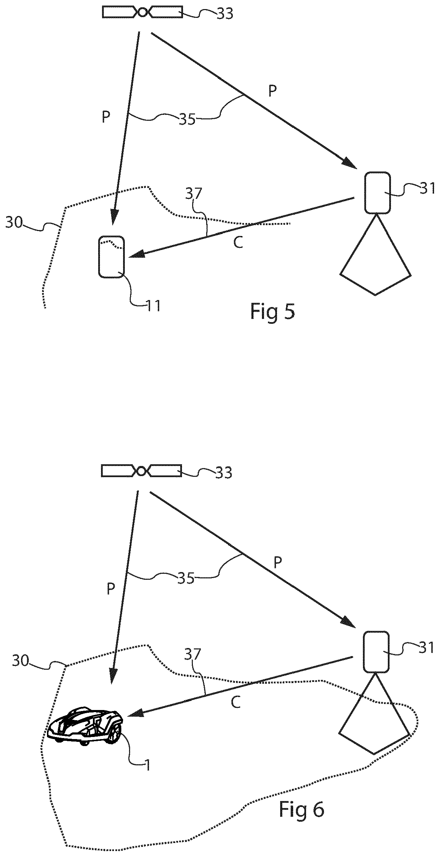

Differential Global Positioning Systems, dGPSs, enhance the positioning data of GPS down to a few centimeters. This may be done as illustrated in fig 5 by using a fixed station 31, located at a position known with high precision.

Both the mobile device 11 and the fixed station 31 receive 35 satellite timing data from a plurality of satellites 33. The fixed station 31, with more exact knowledge of its actual position, can based on this actual position and a position determined based on satellite reception calculate correction data. This correction data C, which when combined with the position determined based on the satellite reception renders the known position, is transmitted 37 to the mobile device 11. Based on the received satellite data P and the correction data C, the mobile device 11 may determine its position with higher precision.

It is also possible to submit correction data relating to approximate satellite timing error and satellite orbit irregularities, as will be discussed.

Different dGPS systems exist. In a first example an RTK, Real Time Kinematics, system may be used in a robotic lawnmower system as illustrated with the example in figs 5 and 6. RTK produces a correction signal based on the phase of the received satellite signal carrier wave. In this case, the system may in addition to the lawnmower itself include a local RTK reference station as the fixed station 31. Preferably, this fixed station is located at a well known position in a global coordinate system such as WGS84, although this is not necessary as will be discussed. When the work area 30 is defined as illustrated in fig 5, the mobile device 11 receives 35 satellite data P from a plurality of satellites 33, while also receiving 37 correction data C from the fixed station 31. As a result the mobile device's 11 position is determined with higher precision, and as a result the positions of the work area 30, which is being built up by the user in the user interface of the mobile device, are defined with higher precision too.

Once the work area 30 has been defined, the corresponding position data is sent to the robotic lawnmower which can process the defined work area 30 while determining its position in relation to the defined work area 30. This may, as illustrated in fig 6, be done by receiving 37 correction data C from the same fixed station 31. This concept has some advantages.

To start with, by providing a local fixed station 31, the mobile device 11 as well as the robotic lawnmower 1 will operate within a short distance from the fixed station 31, typically less than 100 m. This provides correction data with high quality compared to a more distant fixed station which may experience slightly different signal propagation conditions, for instance, leading to different correction data.

The communication of the correction data can be arranged as a local point-to-point link for instance using UHF radio or even Bluetooth or WLAN, for instance.

Regardless of communication mode used, since the robotic lawnmower 1 and the mobile device 11 receive data from the same fixed station 31, the exact positioning of that fixed station 31 is not critical. Even if the position of the fixed station 31 is determined with some offset with regard to a global coordinate system such as WGS84, this offset will be the same in work area 30 as defined with the mobile device 11 and as used by the robotic lawnmower 1. Thereby the robotic lawnmower 1 will nevertheless operate as intended when the work area 30 was defined.

The fixed station 31 may be integrated in a lawnmower charging station, for instance. There also exist networks of fixed stations that transmit correction data for instance using the format RTCM SC-104, which may be accessed by the mobile device 11. Such data may be sent via a cellular mobile system or via Internet. In addition to correction data from fixed stations interpolated data from several fixed station may be accomplished.

Generally therefore, the separate, mobile device may receive the combination of satellite positioning data and correction positioning data from a reference station in different ways as follows. It should be noted that the robotic lawnmower may receive data in the same way, or differently.

Firstly, as mentioned, real-time kinematic, RTK, correction may be employed, determining the GPS (more generally GNSS) errors by evaluating satellite signals in one or more fixed reference stations. The determined errors may then be distributed for instance using IP communication, although as mentioned other communication means are conceivable. This correction data loses accuracy with increasing distance from the reference station but is generally useful even at several km therefrom. Using RTK, accuracy in the cm range may be obtained in less than a half minute.

A second option is to use so called precise point positioning, PPP, for correcting GNSS services. In such services, an estimate of GNSS errors that can be used over an extended geographic area is broadcast e.g. using IP communication or satellite communication, typically L-Band communication (1-2 GHz), such that multiple receivers can use the data simultaneously. While the time for resolving cm range accuracy is longer and processing capacity demands higher, it may still be a viable option for the mobile station. Combinations of RTK and PPP may also be considered.

The mobile device 11 may be adapted in different ways to be made capable of operating according to the present disclosure.

In one example, illustrated in fig 4, a mobile device 11 in the form of a smartphone is provided with a dedicated dGPS receiver 41, such as an RTK receiver or similar as indicated above. This receiver is capable of receiving both satellite and correction data and outputs an exact position to an application in the smartphone 11. As illustrated, this is done via a cable 43, although a short range wireless connection such as Bluetooth could also be used to this end. Alternatively, the smartphone could receive only the correction data from the RTK receiver 41.

As illustrated, a notification 45 may be presented in the user interface when the higher precision position detection is achieved. This prompts the user to begin registering for instance boundary positions 47 of the intended work area.

As an alternative to a smartphone, it is possible to build a single unit device dedicated specifically for this purpose that includes means for the user interface as well as for satellite and correction data reception. As yet another possibility it would be possible to include the correction data reception functionality in a smartphone.

The invention is not restricted to the described embodiments and may be varied and altered in different ways within the scope of the appended claims.

## Claims

1. A method for defining or editing a boundary of a work area (30) in a robotic lawnmower system, the system comprising
- a robotic lawnmower (1), configured to process the work area (30) and to determine its position (xr, yr, zr) in the work area, and
- a separate, mobile device (11) configured to determine its position (xm, ym, zm) in the work area (30) and having a camera (13) configured to capture images of the work area (30) and a display (15) which provides a user interface, enabling a user to define boundary segments (33, 37) of the work area boundary (31, 39) therein as a set of positions which are transferred to the robotic lawnmower (1), **characterized by** the separate, mobile device (11) receiving satellite positioning data from a plurality of satellites and correction positioning data from at least one reference station (31).

2. Method according to claim 1, wherein the robotic lawnmower (1), also receives correction positioning data from a reference station (31).

3. Method according to claim 2, wherein the separate, mobile device (11) and the robotic lawnmower (1), receives correction positioning data from the same reference station (31).

4. Method according to any of claims 1-3, wherein the reference station (31) is located within 100 m from the mobile device (11).

5. Method according to any of the preceding claims, wherein the correction data is sent over a radio channel.

6. Method according to any of the preceding claims, wherein correction data is sent over a cellular mobile network.

7. Method according to any of the preceding claims, wherein an indication is given in the user interface when correction positioning data is received.

8. Method according to any of the preceding claims, wherein the position of the mobile device is determined based on the satellite positioning data and the correction positioning data.

9. A method for defining or editing a boundary of a work area (30) in a robotic lawnmower system, the system comprising
- a robotic lawnmower (1), configured to process the work area (30) and to determine its position (xr, yr, zr) in the work area, and
- a separate, mobile device (11) configured to determine its position (xm, ym, zm) in the work area (30) and having a camera (13) configured to capture images of the work area (30) and a display (15) which provides a user interface, enabling a user to define boundary segments (33, 37) of the work area boundary (31, 39) therein as a set of positions which are transferred to the robotic lawnmower (1), **characterized by** the separate, mobile device (11) receiving satellite positioning data from a plurality of satellites as well as correction positioning data for enhancing said satellite positioning data.

10. A method according to claim 9, wherein said correction positioning data is received via IP communication.

11. A method according to claim 9, wherein said correction positioning data is received via L-band radio communication.

12. A robotic lawnmower system comprising
- a robotic lawnmower (1), configured to process a work area (30) and to determine its position (xr, yr, zr) in the work area, and
- a separate, mobile device (11) configured to determine its position (xm, ym, zm) in the work area (30) and having a camera (13) configured to capture images of the work area (30) and a display (15) which provides a user interface, enabling a user to define boundary segments (33, 37) of the work area boundary (31, 39) therein as a set of positions which are transferred to the robotic lawnmower (1), **characterized by** the separate, mobile device (11) being configured to receive satellite positioning data from a plurality of satellites and correction positioning data from at least one reference station (31).

13. System according to claim 12, wherein the robotic lawnmower (1) is configured to receive correction positioning data from a reference station (31).

14. System according to claim 12, wherein the separate, mobile device (11) and the robotic lawnmower (1), are configured to receive correction positioning data from the same reference station (31).

15. A mobile device (11) for a robotic lawnmower system, wherein the mobile device is configured to determine its position (xm, ym, zm) in a work area (30) and having a camera (13) configured to capture images of the work area (30) and a display (15) which provides a user interface, enabling a user to define boundary segments (33, 37) of the work area boundary (31, 39) therein as a set of positions which may be transferred to a robotic lawnmower (1), **characterized by** the mobile device (11) being configured to receive satellite positioning data from a plurality of satellites as well as correction positioning data for enhancing said satellite positioning data.

16. Data processing equipment comprising at least one processor and memory, configured to carry out the method of any of the claims 1-11.

17. A computer program product comprising instructions which, when the program is executed on a processor, carries out the method according to any of the claims 1-11.

18. A computer-readable storage medium having stored thereon the computer program product of claim 17.
